# EUROPÄISCHE PATENTANMELDUNG

(11) **EP 0 857 909 A1**
(43) Veröffentlichungstag der Anmeldung: **12.08.1998**
(21) Anmeldenummer: 98100904.6
(22) Anmeldetag: 20.01.1998
(51) Int. Cl.: F16L 59/06

(54) **Vakuumisolationselement**

(30) Priorität: 07.02.1997 DE 19704697
(71) Anmelder: BSH Bosch und Siemens Hausgeräte GmbH, 81669 München (DE)
(72) Erfinder: Wenning, Udo, Dr. Dipl.-Phys., 89537 Giengen (DE); Eberhardt, Hans-Frieder, Dipl.-Phys., 89537 Giengen (DE); Hirath, Jürgen, Dipl.-Ing., 89522 Heidenheim (DE)

(57) **Zusammenfassung**

Bei einem Vakuumisolationselement mit einem zumindest weitestgehend angepaßten diffusionsdichten, folienähnlichem Hüllmantel, welcher hermetisch einen Innenraum umschließt, in welchem wenigstens ein in quaderform vorliegender evakuierbarer Wärmeisolationskörper angeordnet und der Luftdruck gegenüber dem Umgebungsdruck abgesenkt ist, ist die Oberfläche des Wärmeisolationskörpers dann durch wenigstens eine Erhöhung und/oder Vertiefung vergrößert.

## Beschreibung

Die Erfindung betrifft ein Vakuumisolationselement mit einem zumindest weitestgehend angepaßt diffusionsdichten, folienähnlichem Hüllmantel, welcher hermetisch einen Innenraum umschließt, in welchem wenigstens ein in Quaderform vorliegender evakuierbarer Wärmeisolationskörper angeordnet und der Luftdruck gegenüber dem Umgebungsdruck abgesenkt ist.

Aus dem Stand der Technik sind Vakuumisolationselemente, sogenannte Vakuumisolationspanel bekannt, welche einen evakuierbaren Stützkörper, beispielsweise aus offenzelligen Hartschäumen, ausgefällter Kieselsäure oder dergleichen aufweisen, welche von einem angepaßten diffusionsdichten Hüllmantel, beispielsweise aus Metall oder Kunststoff, je nach Werkstoffart des Stützkörpers hermetisch umschlossen sind. Beim Evakuiervorgang dieser Vakuumisolationselemente ist ihr wärmeisolierender Stützkörper einem Schrumpfvorgang unterworfen, so daß nicht verhindert werden kann, daß die den Stützkörper einhüllende Folie nach Ihrem Versiegeln an der Oberfläche des Stützkörpers Falten wirft. Durch diese Faltenbildung ist ein späteres funktionsgerechtes Ankleben der Vakuumisolationselemente an den Wandflächen von wärmeisolierenden Gehäusewandungen wie beispielsweise bei Haushaltskältegeräten nicht gewährleistet. Werden derartige, mit Falten beaufschlagte Vakuumisolationselemente dennoch an den Gehäusewandungen der Kältegeräte angebracht, so kann es vorkommen, daß sich diese Vakuumisolationselemente aufgrund der nicht funktionsgerecht möglichen Verklebung von den Gehäusewandungen ablösen und sich somit eine Luftblase zwischen ihnen und der Gehäusewand bildet,wodurch die Wärmeisolationsfähigkeit dieser Gehäusewandung geschmälert ist.

Durch eine derartige Oberflächenvergrößerung des wärmeisolierenden Stützkörpers wird die nach dem Evakuiervorgang des Vakuumisolationselementes aufgrund des bei diesem Vorgang stattfindenden Schrumpfprozesses des Stützkörpers überschüssige Oberfläche der Hüllfolie aufgebraucht, so daß sich die Hüllfolie allseitig glattflächig an die Oberfläche des Stützkörpers anlegt und keine Faltenbildung zeigt. Auf diese Weise ist eine luftblasenfreie Anbringung des Vakuumisolationselementes, beispielsweise mittels eines Klebebandes an der Gehäuseinnenwand eines wärmeisolierenden Gehäuses oder einer wärmeisolierenden Wandung eines Haushaltskältegerätes möglich. Für den Fall, daß die Oberflächenver-größerung des Wärmeisolationskörpers durch eine Erhöhung erzeugt ist, welche beispiels-weise an den größeren Oberflächen des quaderförmigen Wärmeisolationskörpers ange-ordnet ist, so soll diese Erhöhung beispielsweise in Art eines Rahmens oder vollflächig ausgeführt sein und von den seitlichen Rändern der Oberfläche des Wärmeisolationskörpers umlaufend zurückspringen, wodurch in diesem Randbereich eine verbleibende Restober-fläche dieses Wandabschnittes von ca. 10 % bezogen auf die ursprüngliche Oberfläche des Wandabschnittes des Wärmeisolationskörpers ausgegrenzt ist.

Eine besonders günstige Anlage des Vakuumisolationselementes zum funktionsgerechten Verkleben mit der Gehäuseinnenwand eines wärmeisolierenden Gehäuses eines Haushaltskältegerätes ergibt sich, wenn nach einer bevorzugten Ausführungsform des Gegenstandes der Erfindung vorgesehen ist, daß die Oberflächenvergrößerung am Wärmeisolationskörper durch in dessen Oberflächen eingebrachte Vertiefungen erzeugt ist.

Fertigungstechnisch besonders einfach herstellbar sind die Vertiefungen mittels span-hebender oder spanloser Fertigungsverfahren, wenn nach einer nächsten bevorzugten Ausführungsform des Gegenstandes der Erfindung vorgesehen ist, daß die Vertiefungen nutenähnich ausgebildet sind.

Gemäß einer weiteren bevorzugten Ausführungsform des Gegenstandes ist vorgesehen, daß die nutenähnlichen Vertiefungen an den Umfangsseiten des quaderförmigen Wärmeisolationskörpers angeordnet sind.

Durch eine derartige Ausführungsform des erfindungsgemäßen Vakuumisolationselementes ist auf einfache Weise an dem quaderförmigen Wärmeisolationstützkörper eine besonders große Oberfläche erzeugt, welche eine besonders sichere Verklebung des Vakuumiso-lationselementes mit der Gehäuseinnenwand einer wärmeisolierenden, bei Haushaltskälte- geräten zu Einsatz kommenden Gehäusewandung ermöglicht. Gleichzeitig ist dann das überschüssige Material der den Wärmeisolationskörper hermetisch umschließenden Folie unauffällig an den schmalseitigen Umfangsseiten des Vakuumisolationselementes aufgebraucht. Außerdem erfährt das Vakuumisolationselement keine seiner Statik schmälernde Querschnittsverminderung.

Gemäß einer letzten bevorzugten Ausführungsform des Gegenstandes der Erfindung ist vorgesehen, daß die nutenähnlichen Vertiefungen an zumindest einer der großflächigen Oberflächen des quaderförmigen Wärmeisolationskörpers angeordnet und als Luftkanäle ausgebildet sind.

Durch eine derartige Ausführung verringert sich die Zeit zum Evakuieren eines Vakuumisolationselementes deutlich, wodurch die Taktzeit bei der Produktion der Vakuumisolationselemente merklich absinkt und somit der Fertigungsausstoß an Vakuumisolationselementen deutlich gesteigert ist.

Die Erfindung ist in der nachfolgenden Bescheibung anhand von zwei in der beigefügten Zeichnung vereinfacht dargestellten Ausführungsbeispielen erläutert:
Es zeigen:
- Fig. 1: Ein erster Ausführungsform eines Vakuumisolationselementes mit einem quaderförmigen Wärmeisolationskörpers, welche an einer seiner größeren Quaderoberflächen mit Luftkanälen ausgestattet ist, in raumbildlicher Ansicht von oben,
- Fig. 2: in einem vergrößerten Ausschnitt das Vakuumisolationselement gemäß Fig. 1 in Vorderansicht, geschnitten entlang der Schnittlinie II-II und
- Fig. 3: eine zweite Ausführungsform eines Vakuumisolationselementes mit einer rahmenähnlich an einer der größeren Quaderoberflächen des quaderförmigen Wärmeisolationskörpers eingebrachten Vertiefung.

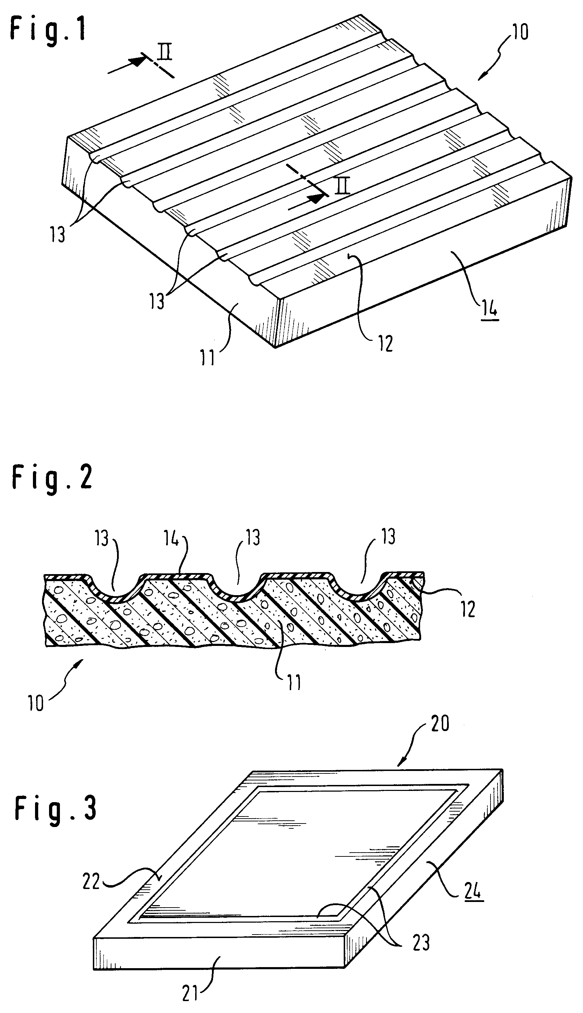

Gemäß Fig. 1 ist ein zum Einsatz in der Wärmeisolation eines wärmeisolierenden Gehäuses für für ein Haushaltsgerät wie z. B. ein Haushaltskältegerät geeignetes Vakuumisolationselement 10 gezeigt, welches mit einem quaderförmigen Wärmeisolationskörper 11 ausgestattet ist. Dieser ist beispielsweise aus ausgehärtetem, zu Plattenkörpern geformten, offenzelligem Polyurethanschaum bzw. Polyisocyanuratschaum, offenzelligem Polystyrolschaum oder anderen offenzelligen Polymerschäumen gebildet oder aber auch aus zu Platten verarbeiteten Glasfasern hergestellt. Der quaderförmig ausgebildete, im vorliegendem Fall einstückige Wärmeisolationskörper 11 ist an einer seiner größeren Quaderoberflächen 12 mit in gleichmäßigem Abstand nebeneinander angeordneten, entlang der längeren Längskante des Quaders verlaufenden nutenähnlichen Vertiefungen 13 versehen, welche als Luftkanäle dienen. Die Vertiefungen 13 sind im Falle der voranstehend angeführtem offenzellig ausgebildeten Hartschaumplatten anhand eines spanabhebenden Fertigungsverfahrens wie Fräsen, Sägen oder dergleichen in die Oberfläche 12 des Wärmeisolationskörpers 11 eingebracht. Bei zu Platten geformten Glasfasern sind die Vertiefungen 13 mittels spanloser Formgebung in die Quaderoberfläche 12 einbringbar.

Der Wärmeisolationskörper 11 ist wie insbesondere aus Fig. 2 ersichtlich ist, von einem folienähnlichen dünnwandingen Hüllmantel 14 hermetisch umschlossen und hinsichtlich ihres Folienmaterials auf das für den Währmeisolationskörper 11 zur Anwendung kommende Material hinsichtlich ihrer Diffusionsdichtigkeit abgestimmt ist, wobei sowohl für den aus offenzelligen Hartschaumplatten, als auch für den aus Glasfaser gebildeten Wärmeisolationskörper 11 eine Metallfolie mit der Materialstärke von ca. 0,4 mm zum Einsatz kommt. Die als Hüllmantel 14 zum Einsatz kommende Metallfolie schmiegt sich nach bzw. während des Evakuiervorganges des Vakuumisolationselementes 12, während welchem der Wärmeisolationskörper 11 einem deutlichem Schrumpfprozeß unterworfen ist, an die Oberfläche des Wärmeisolationskörpers 11 an, wobei das aufgrund des Schrumpfungsprozesses des Wärmeisolationskörpers 11 überschüssige Material des Hüllmantels 14 durch die anhand der Vertiefungen 13 erzeugte Oberflächenvergrößerung am Wärmeisolationskörper 11 abgefangen und dadurch eine Faltenbildung an der Oberfläche des Wärmeisolationskörpers 11 gänzlich verhindert ist. Durch die faltenfreie Oberfläche des Wärmeisolationskörpers 11 läßt sich dieser luftblasenfrei und dauerhaft an der Innenseite eines mit Wärmeisolationsmaterial zu verfüllenden wärmeisolierenden Gehäuses befestigen.

Neben der oben erwähnten Metallfolie für den Einsatz als Hüllmantel 14, kann dieser auch aus einem Schichtstoff mit einer Gesamtstärke von ca. 10 µm bestehen, wobei dieser Schichtstoff z.B. aus einer OPA-Schicht, einer mPET-Schicht, einer Al-Schicht und einer HDPE-Schicht gebildet ist.

Figur 3 zeigt eine alternative Ausführungsform eines Vakuumisolationselements 20, dessen Wärmeisolationskörper 21 aus den gleichen Materialien wie der Wärmeisolationskörper 11 gebildet ist, jedoch im Unterschied zu diesem an einer seiner größeren Quaderoberflächen 22 mit einer entlang den Rändern der Quaderoberfläche 22 umlaufend angeordneten rahmenähnlich verlaufenden Vertiefung 23 versehen ist. Die nutenähnlich geformte Vertiefung 23 dient wie die als Luftkanäle ausgebildeten Vertiefungen 13 zur Schaffung einer vergrößerten Oberfläche am Wärmeisolationskörper 21, welcher von einem folienartigen Hüllmantels 24 umgeben ist und während des Evakuiervorgangs des Vakuumisolationselementes 20 eine deutliche Volumenverringerung erfährt, wobei seine ursprüngliche Oberfläche anhand der Vertiefung 23 wieder hergestellt ist. Durch die Oberflächenvergrößerung des Wärmeisolations-körpers 21 anhand seiner Vertiefung 23 ist eine faltenfreie allseitige Anlage des Hüllmantels 24 an der Oberfläche des Wärmeisolationskörpers 21 nach dem Evakuiervorgang gewährleistet.

## Patentansprüche

1. Vakuumsisolationselement mit einem zumindest weitstgehend angepaßt diffusiondichten folienähnlichem Hüllmantel, welcher hermetisch einen Innenraum umschließt, in welchem wenigstens ein in Quaderform vorliegender, evakulerbarer Währmeisolationskörperangeordnet und der Luftdruck gegenüber dem Umgebungsdruck abgesenkt ist, dadurch gekennzeichnet, daß die Oberfläche des Wärmeisolationskörpers (11, 21) durch wenigstens eine Erhöhung und/oder Vertiefung (13, 23) vergrößert ist.

2. Vakuumisolationselement nach Anspruch 1, dadurch gekennzeichnet, daß die Oberflächenvergrößerung am Wärmeisolationskörper (11, 21) durch in dessen Oberfläche eingebrachte Vertiefungen (13, 23) erzeugt ist.

3. Vakuumisolationselement nach Anspruch 1 oder 2, dadurch gekennzeichnet, daß die Vertiefungen (13, 23) nutenähnlich ausgebildet sind.

4. Vakuumisolationselement nach Anspruch 3, daß die nutenähnlichen Vertiefungen (13, 23) an den Umfangsseiten des quaderförmigen Wärmeisolationskörpers (11, 21) angeordnet sind.

5. Vakuumisolationselement nach Anspruch 3, danach gekennzeichnet, daß die nuten-ähnlichen Vertiefungen (13) an zumindest einer der großflächigen Oberflächen (12) des quaderförmigen Isolationskörpers (11) angeordnet und als Luftkanäle ausgebildet sind.
